Europäisches Patentamt

(19) European Patent Office

Office européen des brevets

(11) Numéro de publication: **0 259 899**
**B1**

(12) **FASCICULE DE BREVET EUROPÉEN**

(45) Date de publication du fascicule du brevet:
07.02.90

(51) Int. Cl. ⁵: **B 32 B 27/30, A 61 J 1/00**

(21) Numéro de dépôt: 87201246.3

(22) Date de dépôt: 30.06.87

(54) **Structures thermoplastiques, multicouches coextrudées et souples comprenant une couche en copolymère de chlorure de vinylidène et une couche en polymère de chlorure de vinyle et leur utilisation pour la fabrication d'emballages.**

(30) Priorité: 11.07.86 FR 8610317

(43) Date de publication de la demande:
16.03.88 Bulletin 88/11

(45) Mention de la délivrance du brevet:
07.02.90 Bulletin 90/06

(84) Etats contractants désignés:
AT BE CH DE ES FR GB GR IT LI LU NL SE

(56) Documents cité:
EP-A-0 079 731
EP-A-0 095 526
GB-A-2 043 533
US-A-4 133 926

(73) Titulaire: **SOLVAY & Cie (Société Anonyme)**
**Rue du Prince Albert, 33**
**B-1050 Bruxelles (BE)**

(72) Inventeur: **Dehennau, Claude**
**Chemin des Postes, 236**
**B-1410 Waterloo (BE)**
Inventeur: **Demey, Jean**
**Chaussée de Gromptinne, 125**
**B-5340 Gesves (BE)**

(74) Mandataire: **Marckx, Frieda**
**Solvay & Cie Département de la propriété industrielle**
**310, rue de Ransbeek**
**B-1120 Bruxelles (BE)**

**Description**

La présente invention concerne des structures thermoplastiques souples à couches polymériques multiples coextrudées comprenant une couche en copolymère du chlorure de vinylidène liée à une couche en polymère plastifié du chlorure de vinyle, ainsi que l'utilisation de ces structures pour la fabrication d'emballages souples.

Il est bien connu d'améliorer l'imperméabilité aux gaz et aux vapeurs d'emballages divers en polymères thermoplastiques de masse en les associant à un copolymère du chlorure de vinylidène dans une structure à couches polymériques multiples. La coextrusion, c'est-à-dire l'extrusion simultanée à travers une filière unique, constitue une technique de mise en oeuvre particulièrement appropriée pour associer en une seule opération diverses couches en polymères thermoplastiques.

Dans la demande de brevet FR-A-84.11630 (SOLVAY & Cie), on décrit des structures thermoplastiques rigides à cinq couches polymériques coextrudées comprenant une couche centrale en copolymère du chlorure de vinylidène liée, de part et d'autre, à une couche de structure en polychlorure de vinyle rigide à l'intervention de couches adhésives intermédiaires constituées d'un polymère du chlorure de vinyle dont la température de gélification et la viscosité dynamique à 180°C et 1 sec$^{-1}$ sont inférieures à celles du polychlorure de vinyle adjacent constituant la couche de structure.

On a maintenant constaté que si l'on remplaçait dans de telles structures le polymère rigide par un polymère plastifié du chlorure de vinyle, l'adhérence entre les couches en polychlorure de vinyle plastifié et en copolymère du chlorure de vinylidène était nulle.

Dans le brevet BE-A-640 999 (SOLVAY & Cie), on préconise l'emploi de copolymères du chlorure de vinyle et de l'acétate de vinyle pour lier entre elles par pressage à chaud des feuilles en polychlorure de vinyle souple (plastifié). Lorsqu'on recourt à de tels copolymères du chlorure et de l'acétate de vinyle pour lier par coextrusion une couche en polychlorure de vinyle plastifié à une couche en copolymère du chlorure de vinylidène, on obtient des liens adhésifs d'un niveau acceptable à température ambiante. Toutefois, après un traitement thermique, tel qu'une soudure ou une stérilisation à la vapeur d'eau, l'adhérence devient très faible à tel point que les couches délaminent et que de nombreuses craquelures apparaissent sur toute la surface de la structure.

Il est par ailleurs connu d'utiliser des latex de copolymères d'acétate de vinyle et d'éthylène à teneur prépondérante en acétate de vinyle pour coller le polychlorure de vinyle souple ou les copolymères du chlorure de vinylidène sur des supports divers, tels que le bois et les textiles (Double liaison 1974, 21, juin, p. 263-267). Lorsqu'on a utilisé de tels copolymères comme couche d'ancrage polymérique dans la coextrusion de copolymères du chlorure de vinylidène et de polychlorure de vinyle plastifié, on a obtenu des liens adhésifs de qualité supérieure, tant à température ambiante qu'après traitement thermique, à celle que procurent les copolymères précités du chlorure et de l'acétate de vinyle. Néanmoins, des plissements importants provenant d'un glissement des couches les unes sur les autres sont apparus rendant le complexe multicouche inesthétique et inutilisable en pratique.

La présente invention vise à procurer des structures thermoplastiques souples à couches polymériques multiples coextrudées dans lesquelles une couche en copolymère du chlorure de vinylidène est liée à une couche en polymère plastifié du chlorure de vinyle qui ne présentent pas les inconvénients précités.

A cet effet l'invention, telle que caractérisée dans les revendications, procure des structures thermoplastiques à couches polymériques multiples présentant une résistance élevée au délaminage, tant à température ambiante qu'après stérilisation à la vapeur d'eau à 121°C, et dont la surface ne présente ni plis, ni craquelures.

L'invention réside donc essentiellement dans le recours à un mélange d'adhésifs polymériques constitué de 10 à 90 parties en poids d'un copolymère d'acétate de vinyle et d'éthylène et de 90 à 10 parties en poids d'un copolymère de chlorure de vinyle et d'acétate de vinyle et dont le module élastique en cisaillement G' à 121°C et 10$^{-4}$ cycles/seconde est supérieur à $0,5 \cdot 10^3$ Pa pour lier et faire adhérer une couche en copolymère du chlorure de vinylidène à une couche en polymère plastifié du chlorure de vinyle.

Les structures thermoplastiques souples à couches polymériques coextrudées selon l'invention comprennent donc au moins trois couches, à savoir une couche en polymère plastifié du chlorure de vinyle (A) liée à une couche en copolymère du chlorure de vinylidène (C) à l'intervention d'une couche adhésive selon l'invention (B) (structure ABC). Elles peuvent bien entendu comprendre un nombre supérieur de couches. C'est ainsi qu'on peut lier la face externe de la couche en copolymère du chlorure de vinylidène (C) à un polymère thermoplastique autre que le polychlorure de vinyle (E), tel que, par exemple une polyoléfine, un copolymère d'éthylène et d'acétate de vinyle, un polyester ou un polyamide, à l'intervention d'une couche adhésive appropriée (D) (structure asymétrique ABCDE). On donne néanmoins la préférence aux structures symétriques à cinq couches constituées d'une couche centrale en copolymère du chlorure de vinylidène (C) liée, de part et d'autre, à une couche en polymère plastifié du chlorure de vinyle (A) à l'intervention d'une couche adhésive selon l'invention (B) (structure ABCBA).

Un aspect surprenant de l'invention réside dans l'obtention de niveaux d'adhérence nettement supérieurs à ceux que procurent les copolymères d'acétate de vinyle et d'éthylène, d'une part, et les copolymères de chlorure de vinyle et d'acétate de vinyle, d'autre part, et de structures thermoplastiques de bel aspect dont la surface n'est ni craquelée, ni plissée.

Par copolymère d'acétate de vinyle et d'éthylène, on entend désigner les copolymères d'acétate de vinyle et d'éthylène contenant au moins 50 % en poids d'acétate de vinyle. Les meilleurs résultats sont obtenus avec les copolymères binaires d'acétate de vinyle et d'éthylène contenant de 60 à 95 % en poids d'acétate de vinyle et,

EP 0 259 899 B1

plus particulièrement encore, avec ceux contenant de 65 à 85 % en poids d'acétate de vinyle auxquels on donne par conséquent la préférence.

Les polymères d'acétate de vinyle et d'éthylène sont des polymères plus ou moins collants et, de ce fait, difficiles à mettre en oeuvre. Afin de pallier cet inconvénient, il est particulièrement avantageux d'utiliser un copolymère d'acétate de vinyle enrobé d'un polymère thermoplastique. Suivant un mode de réalisation particulièrement préféré de l'invention, on utilise donc un copolymère d'acétate de vinyle et d'éthylène enrobé d'un polymère thermoplastique. A titre d'exemples de pareils polymères thermoplastiques, on peut citer les polymères du fluorure de vinyle ou de vinylidène et les polymères du chlorure de vinyle. Un polymère thermoplastique d'enrobage tout particulièrement préféré est le polychlorure de vinyle. Le polymère thermoplastique d'enrobage est généralement présent à raison d'environ 10 % en poids au maximum du polymère d'acétate enrobé.

L'enrobage du polymère d'acétate de vinyle par un polymère thermoplastique peut s'effectuer, par exemple, par addition à un latex de polymère d'acétate de vinyle d'un latex de polymère thermoplastique et coagulation de l'ensemble, par exemple par addition d'un électrolyte.

Par copolymère de chlorure de vinyle et d'acétate de vinyle, on entend désigner les copolymères de chlorure de vinyle et d'acétate de vinyle contenant au moins 50 % en poids de chlorure de vinyle. Les meilleurs résultats sont obtenus avec les copolymères binaires de chlorure et d'acétate de vinyle contenant de 60 à 98 % en poids de chlorure de vinyle et, plus particulièrement encore avec ceux contenant de 80 à 95 % en poids de chlorure de vinyle.

Les proportions relatives de copolymère d'acétate de vinyle et de copolymère de chlorure de vinyle dans le mélange d'adhésifs polymériques peuvent varier dans une large mesure.

Néanmoins, on donne la préférence à une proportion de 25 à 75 parties en poids de copolymère d'acétate de vinyle et d'éthylène pour 75 à 25 parties en poids de copolymère de chlorure de vinyle et d'acétate de vinyle. Les meilleurs résultats sont obtenus avec un mélange approximativement équipondéral.

Suivant un mode de réalisation préféré de l'invention, le mélange d'adhésifs polymériques comprend donc un copolymère d'acétate de vinyle et d'éthylène contenant de 65 à 85 % en poids d'acétate de vinyle et un copolymère de chlorure de vinyle et d'acétate de vinyle contenant de 80 à 95 % en poids de chlorure de vinyle en proportion approximativement équipondérale.

On a par ailleurs constaté que des résultats particulièrement intéressants sont obtenus, tant au niveau de l'adhérence que de l'aspect de surface des structures thermoplastiques coextrudées, lorsque le module élastique en cisaillement G' à 121°C et $10^{-4}$ cycles/seconde du mélange d'adhésifs polymériques est supérieur à $1 \cdot 10^3$ Pa.

Par polymère du chlorure de vinyle, on entend désigner ici les polymères contenant au moins 70 % en poids d'unités monomériques dérivées du chlorure de vinyle. Les polymères du chlorure de vinyle utilisables pour la réalisation des complexes multicouches selon l'invention comprennent donc aussi bien les homopolymères du chlorure de vinyle que ses copolymères contenant des unités monomériques dérivées d'un ou de plusieurs comonomères et leurs mélanges. A titres d'exemples non limitatifs de pareils comonomères du chlorure de vinyle on peut citer les oléfines telles que l'éthylène, le propylène et le styrène, les esters tels que l'acétate de vinyle et les acrylates et méthacrylates d'alkyle. On donne la préférence aux homopolymères du chlorure de vinyle.

Par polymère plastifié du chlorure de vinyle, on entend désigner les polymères du chlorure de vinyle tels que définis ci-dessus dont la dureté Shore A, mesurée selon la norme ASTM D2240, ne dépasse pas 95 et, de préférence 90. Habituellement la dureté Shore A est égale à 60 au moins. A titre d'exemples de pareils polymères plastifiés, on peut mentionner ceux contenant environ 35 à 75 parties en poids de plastifiant et, de préférence, au moins 40 parties en poids de plastifiant pour 100 parties en poids de polymère du chlorure de vinyle. Les plastifiants utilisables peuvent être choisis indifféremment parmi les plastifiants, monomériques ou polymériques, usuels des polymères du chlorure de vinyle. A titre d'exemples non limitatifs de pareils plastifiants on peut mentionner les phtalates, les sebaçates, les adipates, les trimellitates, les citrates, les phosphates et les polyesters tels que la poly-ε-caprolactone et leurs mélanges.

On peut également faire appel à des polymères du chlorure de vinyle dits à plastification interne obtenus par copolymérisation du chlorure de vinyle avec des comonomères plastifiants, tels que par exemple l'acrylate d'éthylhexyle.

Par copolymère du chlorure de vinylidène, on entend désigner les copolymères du chlorure de vinylidène contenant de 60 à 95 % en poids de chlorure de vinylidène, le solde étant constitué d'un ou de plusieurs comonomères à insaturation éthylénique, tels que, par exemple le chlorure de vinyle, les acides et les esters acryliques et méthacryliques, les nitriles acryliques et méthacryliques. On donne néanmoins la préférence aux copolymères binaires du chlorure de vinylidène et du chlorure de vinyle contenant environ 75 à 85 % en poids de chlorure de vinylidène.

Il est entendu que chacun des polymères constitutifs des structures à couches multiples selon l'invention peut comprendre les additifs usuels utilisés à la mise en oeuvre de ce polymère, tels que, par exemple, des lubrifiants, des plastifiants, des stabilisants thermiques, des stabilisants à la lumière, des charges, des pigments, etc. Il peut être avantageux d'incorporer une faible quantité, par exemple jusqu'à 10 % en poids environ, du mélange des polymères adhésifs aux polymères constitutifs des structures à couches multiples.

Pour la réalisation des structures multicouches selon l'invention, on peut faire appel aux techniques usuelles de coextrusion à travers une filière, plate ou ronde, à bloc d'alimentation ("feed-block") ou à multicanaux ("multi-manifold"). Ces techniques se caractérisent par le fait que les flux des polymères fondus constitutifs des différentes couches se joignent et cheminent ensemble à l'état fondu avant la sortie de la filière unique. Néanmoins, on donne la préférence aux structures multicouches coextrudées à travers une filière à multicanaux et plus particulièrement encore une filière ronde à multicanaux.

L'épaisseur des couches polymériques constitutives des complexes multicouches selon l'invention et l'épaisseur totale desdites structures n'est pas critique et dépend bien entendu de l'usage auquel on les destine et du niveau d'imperméabilité recherché. Pour fixer les idées, l'épaisseur totale des structures thermoplastiques multicouches est comprise en général entre 130 et 3500 µm et, de préférence, entre 180 et 2000 µm. L'épaisseur de la couche en copolymère du chlorure de vinylidène est comprise, en général, entre 10 et 850 µm et, de préférence, entre 20 et 500 µm et celle des couches intermédiaires assurant l'adhérence entre 1 et 100 µm et, de préférence, entre 2 et 50 µm. Les structures multicouches selon l'invention peuvent donc se présenter sous forme de films, de feuilles, de berlingots et de poches souples. Elles peuvent être utilisées avantageusement pour la fabrication d'emballages pour produits alimentaires, pharmaceutiques et cosmétologiques. Les structures multicouches souples symétriques à cinq couches polymériques coextrudées à travers une filière ronde à multicanaux conviennent tout particulièrement pour la fabrication de berlingots et de poches stérilisables pour l'emballage de liquides nutritionnels ou physiologiques et, en particulier, de poches à sang, à soluté ou à dialyse.

Les exemples qui suivent sont destinés à illustrer l'invention sans toutefois la limiter.

Les exemples 1 à 7 concernent des structures thermoplastiques annulaires souples à cinq couches coextrudées ABCBA. Dans les exemples 1 et 2, selon l'invention, et dans l'exemple 5, de comparaison, les couches adhésives B sont constituées d'un mélange équipondéral de copolymère d'acétate de vinyle et d'éthylène et de copolymère de chlorure de vinyle et d'acétate de vinyle. Dans l'exemple 3, de comparaison, les couches adhésives B sont constituées d'un copolymère d'acétate de vinyle et d'éthylène. Dans l'exemple 4, également de comparaison, les couches adhésives B sont constituées d'un copolymère de chlorure de vinyle et d'acétate de vinyle. Dans les exemples 6 et 7, selon l'invention, les couches adhésives B sont constituées de mélanges de copolymère d'acétate de vinyle et d'éthylène et de copolymère de chlorure de vinyle et d'acétate de vinyle en les proportions pondérales suivantes: 50 – 50 (exemple 6) et 75 – 25 (exemple 7). La composition et le module élastique en cisaillement G' à 121°C et une fréquence de sollicitation de cycles/seconde des adhésifs utilisés aux exemples 1 à 7 figurent au tableau 1 en annexe.

Le module d'élasticité G' est évalué sur un rhéogoniomètre dans lequel l'échantillon est placé entre deux disques plans et soumis à des déformations en cisaillement de faible amplitude à des fréquences comprises entre $10^{-1}$ et $10^{2}$ cycles par seconde. Les températures explorées vont de 100°C à 140°C, de façon à permettre une évaluation du module à 121°C et à une fréquence de $10^{-4}$ cycles par seconde.

Les prémélanges utilisés pour les couches A (polychlorure de vinyle plastifié) et C (copolymère du chlorure de vinylidène), préparées sur mélangeur rapide, ont la composition pondérale suivante:

### Couche A

| | |
|---|---|
| Polychlorure de vinyle, de nombre K71 | 100 |
| Phtalate de diéthylhexyle | 44 |
| Huile de soja époxydée | 4,2 |
| Stabilisant calcium-zinc | 0,4 |

### Couche C

| | |
|---|---|
| Copolymère du chlorure de vinylidène contenant 22,5 % en poids de chlorure de vinyle | 100 |
| Stabilisant époxy | 4 |
| Silice colloïdale | 0,2 |
| Lubrifiant externe | 0,3 |

Pour fabriquer les structures coextrudées selon les exemples 1 à 7, on dispose de trois extrudeuses de type monovis A, B et C alimentant une tête de coextrusion à multicanaux en ce qui concerne l'alimentation des diverses résines et de section annulaire en ce qui concerne le canal principal dans lequel s'écoule le complexe multicouche fondu.

L'extrudeuse A présente une longueur de vis égale à 20 fois le diamètre et un taux de compression égal à 3. Elle extrude le polychlorure de vinyle plastifié. Les températures de chauffe affichées, allant de la zone d'alimentation à la zone de pompage, s'élèvent à 136°C – 162°C – 171°C – 176°C.

L'extrudeuse B présente une longueur de vis égale à 25 fois le diamètre et un taux de compression égal à 4. Elle extrude les adhésifs polymériques B. Les températures de chauffe affichées, allant de la zone d'alimentation à la zone de pompage, pour les cinq types d'adhésifs B évalués sont reprises au tableau II en annexe.

L'extrudeuse C présente une longueur de vis égale à 20 fois le diamètre et un taux de compression égal à 4. Elle extrude le copolymère du chlorure de vinylidène. Les températures de chauffe affichées, allant de la zone d'alimentation à la zone de pompage, s'élèvent à 130°C et 150°C.

Les débits des trois extrudeuses sont réglés de façon à régler l'épaisseur des couches dans le complexe multicouche fini. Les épaisseurs réalisées figurent au tableau III en annexe.

La tête de coextrusion est alimentée en polychlorure de vinyle plastifié par le biais d'un diviseur indexé à 180°C qui sépare le flux principal issu de l'extrudeuse A en deux flux secondaires de manière à former les couches intérieure et extérieure de la gaine multicouche.

La tête de coextrusion est alimentée en adhésif par le biais d'un second diviseur indexé à 145°C qui sépare le flux principal d'adhésif issu de l'extrudeuse B en deux flux secondaires de manière à former les deux couches adhésives se trouvant de part et d'autre de la couche centrale C en copolymère du chlorure de vinylidène.

La tête de coextrusion est alimentée directement en copolymère du chlorure de vinylidène par l'extrudeuse C via une connexion indexée à 136°C.

Les cinq éléments de la tête de coextrusion à multicanaux qui mettent sous forme annulaire les diverses couches A, B et C sont maintenus respectivement à 178°C pour les deux éléments alimentés en polychlorure de vinyle plastifié, à 178°C pour les deux éléments alimentés en adhésif et à 136°C pour l'élément alimenté en copolymère du chlorure de vinylidène. La filière finale de mise à dimension du complexe multicouche fondu est portée à 178°C. Elle présente un diamètre de 27,4 mm, le noyau présentant un diamètre de 25,8 mm. La gaine multicouche est soufflée en fondu par insufflation d'air et, dès sa sortie de la filière, calibrée par un calibreur de 32 mm de diamètre avant enroulement.

En vue d'évaluer l'adhérence (résistance au délaminage) des complexes multicouches, on découpe dans la gaine refroidie des échantillons de 1 x 10 cm. L'adhérence est évaluée à 23°C sur un dynamomètre suivant une méthode proche de la norme ASTM D1876-72. L'adhérence est également évaluée sur d'autres échantillons découpés dans la gaine après stérilisation à la vapeur d'eau à 121°C pendant 30 minutes. Les résultats de l'évaluation de l'adhérence, avant et après stérilisation, figurent au Tableau IV en annexe.

La gaine multicouche obtenue est par ailleurs découpée en portions de 10 cm de longueur. Celles-ci sont soudées à une extrémité, remplies d'eau sur une hauteur de 5 cm et obturées par pliage et pinçage mécanique de l'autre extrémité pour former des berlingots. Ceux-ci sont ensuite soumis à une stérilisation par chauffage à 121°C pendant 30 minutes au moyen de vapeur d'eau. L'aspect de surface des berlingots après stérilisation, ainsi que l'évaluation de l'importance du glissement au niveau de la soudure des couches en polychlorure de vinyle plastifié extérieure ($A_E$) et intérieure ($A_I$) par rapport à la couche centrale en copolymère du chlorure de vinylidène C sont repris au Tableau V en annexe.

## Tableau I

| N° de l'exemple | Composition de l'adhésif | | | | Module G' de l'adhésif, Pa |
|---|---|---|---|---|---|
| | Copolymère VAC-E* | | Copolymère VC-VA** | | |
| | teneur en VAC, % en poids | MI, *** g/10 min | teneur en VC, % en poids | nombre K | |
| 1 | 85 | 2,6 | 90 | 57 | $2 \cdot 10^3$ |
| 2 | 70 | 13,9 | 90 | 60 | $3,8 \cdot 10^3$ |
| 3 | 85 | 2,6 | néant | – | $4,7 \cdot 10^2$ |
| 4 | néant | – | 85 | 50 | $1,5 \cdot 10^2$ |
| 5 | 85 | 2,6 | 85 | 50 | $4,7 \cdot 10^2$ |
| 6 | 80 | 2,6 | 90 | 60 | $2,5 \cdot 10^3$ |
| 7 | 80 | 2,6 | 90 | 60 | $1,5 \cdot 10^3$ |

\* copolymère VAC-E = copolymère d'acétate de vinyle et d'éthylène
\*\* copolymère VC-VAC = copolymère de chlorure de vinyle et d'acétate de vinyle
\*\*\* MI = indice de fluidité à 170°C sous une charge de 10 kg

## Tableau II

| N° de l'exemple | Températures (°C) affichées à l'extrudeuse monovis B de la zone d'alimentation à la zone de pompage | | |
|---|---|---|---|
| 1 | 123 | 148 | 170 |
| 2 | 123 | 148 | 170 |
| 3 | 113 | 139 | 154 |
| 4 | 100 | 131 | 150 |
| 5 | 128 | 140 | 163 |
| 6 | 115 | 140 | 155 |
| 7 | 115 | 140 | 155 |

## EP 0 259 899 B1

**Tableau III**

| N° de l'exemple | Epaisseur des couches, μm | | | | |
|---|---|---|---|---|---|
| | A interne PVC plastifié | B Adhésif(s) | C PVDC | B Adhésifs | A externe PVC plastifié |
| 1 | 114 | 36 | 21 | 43 | 201 |
| 2 | 131 | 25 | 24 | 17 | 144 |
| 3 | 141 | 17 | 19 | 20 | 131 |
| 4 | 110 | 43 | 22 | 37 | 126 |
| 5 | 142 | 12 | 20 | 19 | 125 |
| 6 | 114 | 26 | 37 | 63 | 114 |
| 7 | 113 | 29 | 39 | 51 | 134 |

**Tableau IV**

| N° de l'exemple | Adhérence à 23°C, Newton/cm | |
|---|---|---|
| | Avant stérilisation | Après stérilisation* |
| 1 | 14,7 | 10,4 |
| 2 | 15,2 | 16,7 |
| 3 | 11,4 | 5,8 |
| 4 | 5,6 | 1,4** |
| 5 | 10 | 2,6 |
| 6 | 16,4 | 16,2 |
| 7 | 13,2 | 16,9 |

* mesure effectuée 72 h après stérilisation
** berlingots non stérilisables, cassent pendant la stérilisation

**Tableau V**

| N° de l'exemple | Aspect de surface des berlingots après stérilisation | Glissement entre les couches, mm | |
|---|---|---|---|
| | | $A_E/C$ | $A_I/C$ |
| 1 | ni plis, ni craquelures | 0-0,35 | 0-0,15 |
| 2 | ni plis, ni craquelures | 0,1-0,15 | 0-0,15 |
| 3 | nombreux plis | 0,6 | 0,3 |
| 4 | plis et nombreuses craquelures | 0,7 | 0,4 |
| 5 | nombreux plis | 1,8 | 0,5 |
| 6 | ni plis, ni craquelures | 0,16 | 0,18 |
| 7 | ni plis, ni craquelures | 0,39 | 0,28 |

## Revendications

1. Structures thermoplastiques souples à couches polymériques multiples coextrudées comprenant une couche en copolymère du chlorure de vinylidène liée à une couche en polymère plastifié du chlorure de vinyle, caractérisées en ce que la couche en copolymère du chlorure de vinylidène est liée à la couche en polymère plastifié du chlorure de vinyle à l'intervention d'un mélange d'adhésifs polymériques constitués de 10 à 90 parties en poids d'un copolymère d'acétate de vinyle et d'éthylène et de 90 à 10 parties en poids d'un copolymère de chlorure de vinyle et d'acétate de vinyle et dont le module élastique en cisaillement G' à 121°C et $10^{-4}$ cycles/seconde est supérieur à $0,5 \cdot 10^3$ Pa.

2. Structures thermoplastiques souples à couches polymériques multiples coextrudées suivant la revendication 1, caractérisées en ce que le copolymère d'acétate de vinyle et d'éthylène est un copolymère binaire d'acétate de vinyle et d'éthylène contenant de 60 à 95 % en poids d'acétate de vinyle et en ce que le copolymère de chlorure de vinyle et d'acétate de vinyle est un copolymère binaire de chlorure de vinyle et d'acétate de vinyle contenant de 60 à 98 % en poids de chlorure de vinyle.

3. Structures thermoplastiques souples à couches polymériques multiples coextrudées suivant la revendication 2, caractérisées en ce que le copolymère binaire d'acétate de vinyle et d'éthylène contient de 65 à 85 % en poids d'acétate de vinyle et en ce que le copolymère binaire de chlorure de vinyle et d'acétate de vinyle contient de 80 à 95 % en poids de chlorure de vinyle.

4. Structures thermoplastiques souples à couches polymériques multiples coextrudées selon l'une quelconque des revendications 1 à 3, caractérisées en ce que le mélange d'adhésifs polymériques comprend de 25 à 75 parties en poids de copolymère d'acétate de vinyle et d'éthylène et de 75 à 25 parties en poids de copolymère de chlorure de vinyle et d'acétate de vinyle.

5. Structures thermoplastiques souples à couches polymériques multiples coextrudées selon l'une quelconque des revendications 1 à 4, caractérisées en ce que, le mélange d'adhésifs polymériques présente un module élastique en cisaillement G' à 121°C et $10^{-4}$ cycles/seconde supérieur à $1 \cdot 10^3$ Pa.

6. Structures thermoplastiques souples à couches polymériques multiples coextrudées selon l'une quelconque des revendications 1 à 5, caractérisées en ce qu'elles contiennent trois couches constituées d'une couche de polymère plastifié du chlorure de vinyle liée à une couche en copolymère du chlorure de vinylidène à l'intervention d'une couche constituée d'un mélange de copolymère d'acétate de vinyle et d'éthylène et de copolymère de chlorure de vinyle et d'acétate de vinyle.

7. Structures thermoplastiques souples à couches polymériques multiples coextrudées selon l'une quelconque des revendications 1 à 5, caractérisées en ce qu'elles contiennent cinq couches constituées d'une couche centrale en copolymère du chlorure de vinylidène liée, de part et d'autre, à une couche en polymère plastifié du chlorure de vinyle à l'intervention d'une couche constituée d'un mélange de copolymère d'acétate de vinyle et d'éthylène et de copolymère de chlorure de vinyle et d'acétate de vinyle.

8. Utilisation des structures thermoplastiques souples à couches polymériques multiples coextrudées suivant l'une quelconque des revendications 1 à 7 pour la fabrication d'emballages souples pour produits alimentaires, pharmaceutiques et cosmétologiques.

9. Utilisation des structures thermoplastiques souples à couches polymériques multiples coextrudées suivant la revendication 7 pour la fabrication de poches et de berlingots stérilisables destinés à l'emballage de liquides nutritionnels ou physiologiques.

**Patentansprüche**

1. Thermoplastische, nachgiebige Strukturen mit mehrfachen, co-extrudierten polymeren Schichten enthaltend eine Vinylidenchloridcopolymerschicht, gebunden an eine Schicht aus plastifiziertem Vinylchloridpolymer, dadurch gekennzeichnet, daß die Schicht aus Vinylidenchloridcopolymer an die Schicht aus plastifiziertem Vinylchloridpolymer durch Einwirkung einer Mischung von polymeren Klebstoffen bestehend aus 10 bis 90 Gewichtsteilen eines Vinylacetat-Ethylen-Copolymers und 90 bis 10 Gewichtsteilen eines Vinylchlorid-Vinlacetat-Copolymers gebunden ist und dessen Elastizitätsmodul bei Abscherung G' bei 121°C und $10^{-4}$ Zyklen/Sekunde über $0,5 \times 10^3$ Pa ist.

2. Thermoplastische, nachgiebige Strukturen mit mehrfachen, co-extrudierten polymeren Schichten nach Anspruch 1, dadurch gekennzeichnet, daß das Vinylacetat-Ethylen-Copolymer ein binäres Copolymer von Vinylacetat und Ethylen enthaltend 60 bis 95 Gew.-% Vinylacetat ist und, daß das Vinylchlorid-Vinylacetat-Copolymer ein binäres Copolymer von Vinylchlorid und Vinylacetat enthaltend 60 bis 98 Gew.-% Vinylchlorid ist.

3. Thermoplastische, nachgiebige Strukturen mit mehrfachen, co-extrudierten polymeren Schichten nach Anspruch 2, dadurch gekennzeichnet, daß das binäre Vinylacetat-Ethylen-Copolymer 65 bis 85 Gew.-% Vinylacetat enthält und, daß das binäre Vinylchlorid-Vinylacetat-Copolymer 80 bis 95 Gew.-% Vinylchlorid enthält.

4. Thermoplastische, nachgiebige Strukturen mit mehrfachen, co-extrudierten polymeren Schichten nach einem der Ansprüche 1 bis 3, dadurch gekennzeichnet, daß die Mischung der polymeren Klebstoffe 25 bis 75 Gew.-% Vinylacetat-Ethylen-Copolymer und 75 bis 25 Gew.-% Vinylchlorid-Vinylacetat-Copolymer enthält.

5. Thermoplastische, nachgiebige Strukturen mit mehrfachen, co-extrudierten polymeren Schichten nach einem der Ansprüche 1 bis 4, dadurch gekennzeichnet, daß die Mischung der polymeren Klebstoffe ein Elastizitätsmodul beim Abscheren G' bei 121°C und $10^{-4}$ Zyklen/Sekunde oberhalb von $1 \times 10^3$ Pa aufweist.

6. Thermoplastische, nachgiebige Strukturen mit mehrfachen, co-extrudierten polymeren Schichten nach einem der Ansprüche 1 bis 5, dadurch gekennzeichnet, daß sie drei Schichten umfassen, bestehend aus einer plastifizierten Vinylchlorid-Polymer-Schicht, gebunden an eine Vinylidenchlorid-Copolymer-Schicht durch Einwirkung einer Schicht bestehend aus einer Mischung von Vinylacetat-Ethylen-Copolymer und Vinylchlorid-Vinylacetat-Copolymer.

# EP 0 259 899 B1

7. Thermoplastische, nachgiebige Strukturen mit mehrfachen, co-extrudierten polymeren Schichten nach einem der Ansprüche 1 bis 5, dadurch gekennzeichnet, daß sie fünf Schichten umfassen, bestehend aus einer zentralen Schicht aus Vinylidenchlorid-Copolymer, die auf beiden Seiten verbunden ist mit einer Schicht aus plastifiziertem Vinylchlorid-Polymer durch Einwirkung einer Schicht bestehend aus einer Mischung von Vinylacetat-Ethylen-Copolymer und Vinylchlorid-Vinylacetat-Copolymer.

8. Verwendung von thermoplastischen, nachgiebigen Strukturen mit mehrfachen, co-extrudierten polymeren Schichten nach einem der Ansprüche 1 bis 7 zur Herstellung von nachgiebigen Verpackungen für Lebensmittel, pharmazeutische und kosmetische Produkte.

9. Verwendung von thermoplastischen, nachgiebigen Strukturen mit mehrfachen, co-extrudierten polymeren Schichten nach Anspruch 7 zur Herstellung von Taschen und sterilisierbaren Verpackungen, bestimmt zur Verpackung von Flüssigkeiten zur Ernährung oder physiologischen Flüssigkeiten.

**Claims**

1. Flexible thermoplastic structures with multiple coextruded polymeric layers comprising a vinylidene chloride copolymer layer bonded to a plasticized vinyl chloride polymer layer, characterized in that the vinylidene chloride copolymer layer is bonded to the plasticized vinyl chloride polymer layer through the intermediacy of a mixture of polymeric adhesives consisting of 10 to 90 parts by weight of a copolymer of vinyl acetate and ethylene and of 90 to 10 parts by weight of a copolymer of vinyl chloride and vinyl acetate and whose shear elastic modulus G' at 121°C and $10^{-4}$ cycles/second is greater than $0.5 \cdot 10^3$ Pa.

2. Flexible thermoplastic structures with multiple coextruded polymeric layers according to Claim 1, characterized in that the copolymer of vinyl acetate and ethylene is a binary copolymer of vinyl acetate and ethylene containing from 60 to 95 % by weight of vinyl acetate and in that the copolymer of vinyl chloride and vinyl acetate is a binary copolymer of vinyl chloride and vinyl acetate containing from 60 to 98 % by weight of vinyl chloride.

3. Flexible thermoplastic structures with multiple coextruded polymeric layers according to Claim 2, characterized in that the binary copolymer of vinyl acetate and ethylene contains from 65 to 85 % by weight of vinyl acetate and in that the binary copolymer of vinyl chloride and vinyl acetate contains from 80 to 95 % by weight of vinyl chloride.

4. Flexible thermoplastic structures with multiple coextruded polymeric layers according to any one of Claims 1 to 3, characterized in that the mixture of polymeric adhesives contains from 25 to 75 parts by weight of copolymer of vinyl acetate and ethylene and from 75 to 25 parts by weight of copolymer of vinyl chloride and vinyl acetate.

5. Flexible thermoplastic structures with multiple coextruded polymeric layers according to any one of Claims 1 to 4, characterized in that the mixture of polymeric adhesives has a shear elastic modulus G' at 121°C and $10^{-4}$ cycles/second which is greater than $1 \cdot 10^3$ Pa.

6. Flexible thermoplastic structures with multiple coextruded polymeric layers according to any one of Claims 1 to 5, characterized in that they contain three layers consisting of a layer of plasticized vinyl chloride polymer bonded to a layer of vinylidene chloride copolymer through the intermediacy of a layer consisting of a mixture of copolymer of vinyl acetate and ethylene and of copolymer of vinyl chloride and vinyl acetate.

7. Flexible thermoplastic structures with multiple coextruded polymeric layers according to any one of Claims 1 to 5, characterized in that they contain five layers consisting of a central layer of vinylidene chloride copolymer bonded on each side to a layer of plasticized vinyl chloride polymer through the intermediacy of a layer consisting of a mixture of copolymer of vinyl acetate and ethylene and of copolymer of vinyl chloride and vinyl acetate.

8. Use of the flexible thermoplastic structures with multiple coextruded polymeric layers according to any one of Claims 1 to 7 for the manufacture of flexible packages for foodstuff, pharmaceutical and cosmetological products.

9. Use of the flexible thermoplastic structures with multiple coextruded polymeric layers according to Claim 7 for the manufacture of sterilizable pouches and tetra-packs intended for packaging nutrient or physiological liquids.

8